Europäisches Patentamt

European Patent Office

Office européen des brevets

(11) Veröffentlichungsnummer: **0 048 837**
A1

# (12) EUROPÄISCHE PATENTANMELDUNG

(21) Anmeldenummer: 81106904.6

(22) Anmeldetag: 03.09.81

(51) Int. Cl.³: **B 32 B 27/12**

(30) Priorität: 01.10.80 DE 3036994

(43) Veröffentlichungstag der Anmeldung: 07.04.82
Patentblatt 82/14

(84) Benannte Vertragsstaaten: **AT BE CH DE FR GB IT LI LU NL SE**

(71) Anmelder: **DYNAMIT NOBEL AKTIENGESELLSCHAFT, Patentabteilung Postfach 1209, D-5210 Troisdorf, Bez. Köln (DE)**

(72) Erfinder: **Jaeschke, Hans, Siegstrasse 99, D-5205 St.Augustin 3 (DE)**
Erfinder: **Spielau, Paul, Dr., Van-Gogh-Platz 10, D-5210 Troisdorf-Eschmar (DE)**
Erfinder: **Ulb, Horst, Friedlandstrasse 20, D-5210 Troisdorf-Sieglar (DE)**

(54) **Verbundwerkstoff enthaltend eine thermoplastische Kunststoffschicht.**

(57) Verbundwerkstoff, insbesondere für den chemischen Apparatebau, enthaltend eine Schicht aus einem thermoplastischen Kunststoff und eine auf diese Schicht in erwärmtem Zustand aufgepreßte textile Schicht aus einem mechanisch vorverfestigten, insbesondere vernadelten und chemisch mit einer Kunststoffdispersion auf Basis von Polymerisaten und/oder Mischpolymerisaten der Acryl- und Methacrylsäureester und der Acrylnitrils gebundenen Polyesterfaservlies.

Troisdorf, den 18. Sept. 1980
OZ 80066 MG/Bd

**DYNAMIT NOBEL AKTIENGESELLSCHAFT**
Troisdorf, Bez. Köln

Verbundwerkstoff enthaltend eine
thermoplastische Kunststoffschicht

Die Erfindung bezieht sich auf einen Verbundwerkstoff, insbesondere für den chemischen Apparatebau, enthaltend eine Schicht aus einem thermoplastischen Kunststoff und eine auf diese Schicht in erwärmten Zustand aufgepreßte textile Schicht, insbesondere einem Polyesterfaservlies.

Im Kunststoffapparate- und Rohrleitungsbau werden in zunehmendem Maße Verbundkonstruktionen aus mehreren Werkstoffen angewendet, um einerseits den Anforderungen an mechanische Steifigkeit und Festigkeit und andererseits z.B. von Chemikalienbeständigkeit zu genügen. Im chemischen Apparatebau werden Behälter vielfach innen mit einem Liner aus thermoplastischem Kunststoff ausgekleidet, der an den Stoßstellen geschweißt werden kann, während die Außenseite mit glasfaserarmierten Kunststofflaminaten verstärkt wird. Besteht der Liner nun aus Polyäthylen oder Polypropylen oder in neuerer Zeit aus Polyvinylidenfluorid, so ist zum Verbinden des glasfaserverstärkten Kunststofflaminates mit dem Liner eine haftvermittelnde Zwischenschicht erforder-

OC48837

lich. Als Zwischenschicht sind hierbei Fasersubstrate bekannt, gewebt oder nicht gewebt, aus natürlichen, künstlichen oder synthetischen Fasern, wie Glasfasern oder Kunststoffasern, die bereits bei der Herstellung der plattenförmigen thermoplastischen Liner auf einer Oberfläche eingepreßt werden. Vorwiegend aus Glasfasern bestehende Gewebe oder Vliese haben eine gute Haftung zum glasfaserverstärktem Kunststoff, bringen jedoch andererseits den Nachteil mit sich, daß sie eine Umformung des Verbundes wegen der Sprödigkeit der Glasfasern nicht zulassen.

Anstelle von Glasfasergeweben sind bereits Fasersubstrate aus Kunststoffasern als Zwischenschicht eingesetzt worden die jedoch den Nachteil aufweisen, daß die erzielbare Schälfestigkeit des Verbundes im Vergleich zu Glasfasergeweben erheblich geringer ist und den gestellten hohen Anforderungen im Apparatebau nicht immer genügt.

Andererseits hat man bereits Polyesterfaservliese als Zwischenschicht eingesetzt, da sie verformbar sind und ermöglichen, das flächige Verbundmaterial warm zu verformen, z. B. zu sogenannten Klöpperböden. Die Nachteile von Glasfasern werden vermieden und sie sind ebenfalls unverrottbar. Dennoch verbleibt auch hier das Problem, eine genügend hohe Haftfestigkeit zu erreichen. Es sind deshalb bereits zahlreiche Versuche bekanntgeworden, die Haftfestigkeit zwischen dem thermoplastischen Kunststoff-Liner und haftvermittendem Fasersubstrat zu erhöhen, wozu wir beispielsweise auf die DE-OS 27 13 754 und 26 55 597 verweisen, die das Problem in Bezug auf Polyvinylidenfluorid beschreiben. In den genannten Offenlegungsschriften werden zur Erhöhung der Haftfestigkeit zwischen Fasersubstrat aus Kunststoff und dem thermoplastischen Liner lösungsmittelhaltige Klebemittel auf der Basis des Kunststoffes und zum anderen Lösungen eines nicht fluorierten Polymeren oder

0048837

Copolymeren in einem aprotischen polaren Lösungsmittel jeweils unter zusätzlicher Anwendung von Wärme zum Herstellen des Verbundes eingesetzt.

Aus der DE-AS 29 22 352 ist ein Verfahren zum haftfesten Verbinden eines Flächengebildes aus einem thermoplastischen Kunststoff mit einem verformbaren Polyesterfaservlies, bei dem das Polyesterfaservlies auf mindestens einer Seite des sich im plastischen bzw. annähernd plastischen Zustand befindlichen Flächengebildes unter Anwendung von Druck aufgebracht und durch anschließendes Abkühlen verankert wird bekannt, bei dem auf der einen Seite des Polyesterfaservlieses eine Kunststoffpulverschicht von 20 bis 100 $g/m^2$ aus dem gleichen Kunststoff, aus dem das Flächengebilde besteht, gleichmäßig aufgetragen und bei einer Temperatur zwischen 100 bis 250°C gesintert und abgekühlt wird, dann die besinterte Seite des Polyesterfaservlieses kontinuierlich mit dem Flächengebilde durch Einwalzen verbunden wird. Als thermoplastische Kunststoffe werden Polyvinylidenfluorid, Polypropylen und Polyäthylen eingesetzt. Nach diesem Verfahren werden zwar bessere Haftfestigkeiten des Verbundwerkstoffes gegenüber dem Einsatz nicht besinterter Polyesterfaservliese erreicht, wie z.B. in den DE-OS 28 18 385 und DE-OS 29 18 923 für Polyvinylidenfluorid beschrieben, jedoch ist der zusätzliche Verfahrensschritt der Besinterung erforderlich.

Nach wie vor besteht die Aufgabe, die erzielbaren Werte der Haftfestigkeit zwischen Kunststoffschicht und textiler Schicht zu steigern und gleichzeitig möglichst einfache Herstellverfahren aus Kostengründen anwenden zu können.

Überraschend hat sich herausgestellt, daß diese Aufgabe durch ein mechanisch vorverfestigtes, insbesondere vernadeltes und chemisch mit einer thermoplastischen Kunststoffdispersion auf Basis von Polymerisaten und/oder Mischpolymerisaten der Acryl- bzw. Methacrylsäureester und

- 4 -

des Acrylnitrils gebundenen Polyesterfaservlies mit der Folge sehr guter Eigenschaftsverbesserungen des Verbundwerkstoffes gelöst werden kann.

Es ist allgemein bekannt, Vliesstoffe ggf. nach Vorverfestigung auf mechanischem Wege u. a. durch Verkleben mit Hilfe eines Bindemittels zu verbinden, siehe z.B. Ullmanns Encyklopädie der technischen Chemie, 3. Auflage, 17. Band, 1966, S. 287 bis 299. Als Bindemittel werden wasserlösliche Binder wie Stärke, Cellulose-Derivate, Viscose u. a. oder Elastoplaste wie synthetische Kautschuk-Latices auf Butadien-Styrol-Basis, Butadien-Acrylnitril-Basis u. a. oder Thermoplaste wie wässrige Dispersionen von Acrylester-Mischpolymerisaten, selbstvernetzende Polyacrylsäureester, Vinylpolymerisate, wie Polyvinylacetat, Polyvinylchlorid und deren Mischpolymerisate u. a. eingesetzt.

Überraschend im Sinn der Erfindung stellte sich nun heraus, daß nur die im Patentanspruch 1 gekennzeichneten Polyesterfaservliese, die mit einem ganz speziellen chemischen Bindemittel gebunden sind, mit einer Reihe von thermoplastischen Kunststoffen, insbesondere Polyvinylidenfluorid, Polyolefinen, insbesondere Polyäthylen und Polypropylen, einen Verbundwerkstoff mit hohen Haftfestigkeitswerten ergeben. Dieser Verbund wird ausschließlich durch Einpressen des Polyesterfaservlieses in den erwärmten Kunststoff erreicht. Es war nicht vorauszusehen, daß allein durch den Einsatz von chemisch auf Basis von Acrylaten gebundenen Polyesterfaservliesen die gestellte Aufgabe gelöst werden konnte, während nur vernadelte Polyester-Stapelfaservliesen bzw. elastoplastische Binder, z.B. auf Basis Butadien-Styrol und auch thermoplastische Binder auf Basis von Vinylpolymerisaten sich als nicht geeignet erwiesen, wie nachfolgende Beispiele noch belegen.

Bevorzugt wird für den erfindungsgemäßen Verbundwerkstoff ein Polyesterfaservlies mit einem Flächengewicht von 100 bis 350 g/m$^2$ mit einem Anteil an Bindemittel von 10 bis 50 % vom Flächengewicht verwendet, eingesetzt. Insbesondere erweist sich erfindungsgemäß der Einsatz thermofixierter Polyesterfaservliese als vorteilhaft, da diese bei der Kaschierung unter Wärmeeinfluß nicht mehr schrumpfen. Bei dem Verbund des erfindungsgemäß eingesetzten Polyesterfaservlieses mit Kunststoffschichten können die erzielbaren Haftfestigkeiten gegenüber den übrigen textilen Schichten und Vliesen um bis zu 100 % und mehr gesteigert werden. Hierbei werden auch die mit der Besinterung nach der DE-AS 29 22 352 bei Polyvinylidenfluoridverbunden erreichten Haftfestigkeitswerte erreicht. Dies gilt nicht nur für Raumtemperatur, sondern auch für höhere Temperaturen, denen solche erfindungsgemäßen Verbundwerkstoffe im Betrieb ausgesetzt sind.

Die Erfindung läßt sich mit besonderem Vorteil für die im konstruktiven Apparatebau eingesetzten thermoplastischen Kunststoffe auf Basis von Polyvinylidenfluorid, Polypropylen und Polypropylen-Copolymere sowie Polyäthylen (Hochdruckpolyäthylen, Niederdruckpolyäthylen) anwenden, wobei reine Kunststofflächengebilde als auch solche aus Formmassen auf Basis der genannten Kunststoffe unter Zusatz von Hilfsstoffen, Füllstoffen, Pigmenten usw. in Frage kommen. Das erfindungsgemäße Verfahren läßt sich insbesondere auch dann mit Vorteil einsetzen, wenn das Verbinden des Flächengebildes aus Kunststoff mit dem Polyesterfaservlies kontinuierlich mittels Walzen erfolgt, wobei eine relativ kurze Verweilzeit zur Anwendung des Verbindungsdruckes im Walzenspalt vorhanden ist. Ein solcher Kaschiervorgang kann beispielsweise direkt einem Extruder zum Extrudieren des Flächengebildes aus thermoplastischem Kunststoff nachgeordnet werden, so daß das Polyesterfaservlies in das noch extrusionswarme Flächengebilde eingebettet wird. Es kann auch von Vorteil sein, das Polyesterfaservlies für den Kaschiervorgang vorzuwärmen.

0048837

Das erfindungsgemäß eingesetzte Polyesterfaservlies ist aufgrund seines Bindemittels offenbar auch so stabil, daß es beim Kaschieren mit dem sich noch im annähernd plastischen Zustand befindlichen Kunststoffschicht nur geringfügig gereckt wird - im Gegensatz z.B. zu chemisch ungebundenen Vliesen - so daß es für spätere Verformungen des Verbundwerkstoffes noch seine volle Dehnfähigkeit behält. Insbesondere jedoch ermöglicht die Art des gewählten Bindemittels für das Polyesterfaservlies eine Vorerwärmung des Polyestervlieses, wodurch sich der Kaschiervorgang verbessern läßt und auch die erreichbaren Haftfestigkeitswerte noch steigern lassen.

Als Fasern für die Vliese kommen insbesondere thermoplastische lineare Polyester auf Basis von Polymerisaten der Terephthalsäure in Frage.

Die Vliese werden beispielsweise durch Vernadelung von Polyesterstapelfasern hergestellt, so daß sie eine hohe Festigkeit bei gleichzeitig guter Dehnung aufweisen. Solche Vliese weisen eine weitgehend strukturfreie Vliesoberfläche auf, so daß sich des weiteren auch aufgrund der thermoplastischen Eigenschaften der Vorteil ergibt, daß bei dem Herstellen des Verbundes mit dem thermoplastischen Flächengebilde sich die Vliesstruktur kaum auf die abgewandte Oberfläche des Flächengebildes durchdrückt. Es ist also möglich, auch relativ dünnwandige Flächengebilde, insbesondere Folien oder Bahnen bzw. Platten aus Polyvinylidenfluorid, Polypropylen oder Polyäthylen mit dem Polyesterfaservlies zu verbinden, ohne daß sich die Struktur auf der den Vlies gegenüberliegenden Seite des Flächengebildes bemerkbar macht. Hierdurch ist es möglich, auch für den Apparatebau Kunststoffflächengebilde relativ geringer Dicke, von 1,0 mm an aufwärts, einzusetzen, wodurch insbesondere bei teuren Werkstoffen, wie Polyvinylidenfluorid, Materialkosten gespart werden und die nötige mechani-

0048837

sche Steifigkeit beispielsweise durch den zusätzlichen Verbund mit glasfaserverstärkten Kunststoffen erbracht wird.

Die Herstellung von einseitig oder beidseitig mit einem Polyesterfaservlies kaschierten thermoplastischen Flächengebilden auf Basis von Polyvinylidenfluorid, Polypropylen oder Polyäthylen erfolgt mit dem Ziel, diese Flächengebilde aus Kunststoff mit weiteren Materialien zum Zwecke der Armierung zu verbinden, wobei insbesondere an glasfaserarmierte ungesättigte Polyesterharze gedacht ist. Da der direkte Verbund zwischen den eingangs genannten Flächengebilden aus Polyvinylidenfluorid, Polypropylen oder Polyäthylen mit glasfaserarmierten ungesättigten Polyesterharzen nicht möglich ist, fungiert das Polyesterfaservlies als Zwischenschicht, wobei die mit dem Polyesterfaservlies erzielbaren Haftfestigkeiten einerseits zum Flächengebilde, andererseits zum armierenden Kunststoff insgesamt die mechanischen Eigenschaften des Gesamtverbundes mitbestimmen. Hierbei zeigen die erfindungsgemäß eingesetzten Polyesterfaservliese gegenüber andersartigen Polyesterfaservliesen eine erhöhte Saugfähigkeit für ungesättigte Polyesterharze, wodurch sich das ungesättigte Polyesterharz leichter aufbringen läßt.

Zum Herstellen eines armierten Verbundformkörpers eignen sich praktisch alle bekannten glasfaserarmierten ungesättigten Polyesterharze, hierzu wird beispielsweise auf die entsprechenden Ausführungen zu ungesättigten Polyesterharzen in dem Kunststoff-Taschenbuch 20. Aussage von H. J. Sechtling, Carl Hanser Verlag München, Wien 1977, Seiten 384 bis 388 verwiesen. Der Glasfaseranteil wird in der Regel zwischen 20 bis 50 Gew.-%, bezogen auf das glasfaserverstärkte ungesättigte Polyesterharz betragen. Die erfindungsgemäßen Verbundwerkstoffe können auch vorteilhaft zur Auskleidung von Stahl- und Betonbehältern eingesetzt werden.

- 8 -

0048837

Das erfindungsgemäß eingesetzte Polyesterfaservlies wirkt sich auch positiv aus, wenn der Verbundwerkstoff z.B. später verschweißt wird, da dieses Polyesterfaservlies an der Schweißnaht nicht infolge der Hitze wegschrumpft und auch kaum anschmilzt.

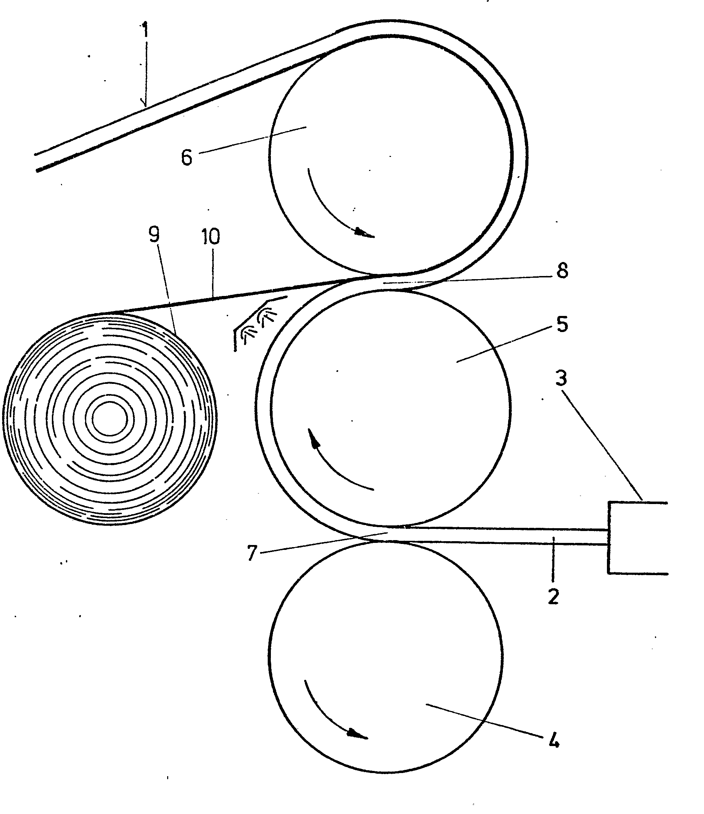

Die Erfindung wird anhand der Zeichnung und der nachfolgenden Beispiele näher erläutert. In der Fig. ist schematisch ein bevorzugtes Herstellungsverfahren für den Verbundwerkstoff 1 dargestellt. Bei kontinuierlicher Verfahrensweise wird die Kunststoffbahn 2 mit dem Extruder 3 extrudiert und einem Glättkalander, beispielsweise mit drei Walzen 4, 5, 6 zugeführt. Die Kunststoffbahn 2 durchläuft erst den zwischen den Walzen 4, 5 gebildeten Walzenspalt 7. Erst in dem nachfolgenden, zwischen den Walzen 5, 6 gebildeten Walzenspalt 8 wird das Polyesterfaservlies 9 zugeführt und kaschiert. Vorteilhaft wird die Oberfläche der Kunststoffbahn 2 vor dem Einlauf in den Walzenspalt 8 nochmals mittels einer Heizeinrichtung, wie IR-Strahler 10 erhitzt, wobei gleichzeitig eine Vorerwärmung des Polyesterfaservlieses 9 stattfindet, infolge des sich vor dem Walzenspalt 8 bildenden Wärmestau Überraschend wird durch dieses einfache Verfahren eine sehr gute Kaschierung des Verbundwerkstoffes 1 aus Kunststoffbahn 2 und Polyesterfaservlies 9 erreicht.

An den nachfolgenden Beispielen wird der erfindungsgemäße Verbundwerkstoff und die mit ihm erzielbaren mechanischen Haftfestigkeiten im Vergleich zum Einsatz anderer textiler Schichten dargestellt. Die thermoplastische Kunststoffschicht und die textile Schicht sind jeweils kontinuierlich mittels Walzen miteinander verbunden. Gemessen wurde die Stirnabzugsfestigkeit in Anlehnung an DIN 53 397, die Druckscherfestigkeit und die Schälfestigkeit gem. British Standards BS 4994/C 11. Für die Messung der Druckscherfestigkeit wird auf eine vorge-fertigte glasfaserverstärkte UP-Harzplatte von 4 mm Dicke auf beide Seiten ein zu prüfender Verbundwerkstoff mittels UP-Harz aufgeklebt mit einem leichten Kontaktdruck von 0,01 N/mm$^2$. Nach dem Aushärten wird der Probekörper auf einer Zugfestigkeitsprüfmaschine mit einem Vorschub von 10 mm/min geprüft, in dem die mittlere UP-Harzplatte aus dem Probekörper herausgedrückt wird. Auch zum Messen der Stirnabzugsfestigkeit und Schälfestigkeit werden Probekörper hergestellt, wobei der Verbundwerkstoff auf seiner textilen Seite mit einem ungesättigten Polyesterharz beharzt wird und dann die Probekörper hergestellt werden. Die Probekörper zum Messen der Stirnabzugsgestigkeit bei 23°C, der Druckscherfestigkeit bei 23°C und der Schälfestigkeit bei 23°C wurden jeweils mit einem ungesättigten Polyesterharz der Zusammensetzung

 100 Gew.-Teile Leguval$^{(R)}$ W 16 BAYER AG
  3 Gew.-Teile Benzoylperoxid
  2 Gew.-Teil Aminbeschleuniger 10 %
         (Dimethylanilinlösung)

und die übrigen Stirnabzugsfestigkeitsversuche unter Verwendung eines bei höheren Temperaturen beständigen Polyesterharzes Leguval$^{(R)}$ W 45 an Stelle Leguval$^{(R)}$ W16 durchgeführt, wobei folgende Zusammensetzung gewählt wurde

 100 Gew.-Teile Leguval$^{(R)}$ W 45 BAYER AG
  2 Gew.-Teile Methyläthyketonperoxyd
  1,5 "  Kobaltbeschleuniger CA 12 (Peroxyd-
               chemie)
  0,5 "  Inhibitor + C 510 (Peroxyd-
               chemie)

## Beispiel 1

Verbundwerkstoff aus einer 4 mm dicken Polyvinylidenfluoridplatte und einem vernadelten, chemisch nicht gebundenen Polyesterstapelfaservlies mit einem Flächengewicht von 150 g/m$^2$, Vergleichsbeispiel, Prüfergebnisse siehe Tabelle.

Beispiel 2

Verbundwerkstoff aus einer 4 mm dicken Polyvinylidenfluoridplatte mit einem Glasfasergewebe von 400 g/m$^2$ Flächengewicht, Vergleichsbeispiel, Prüfergebnisse siehe Tabelle.

Beispiel 3

Verbundwerkstoff aus einer 4 mm dicken Polyvinylidenfluoridplatte mit einem erfindungsgemäß chemisch mit einer Äthylacrylat-Dispersion gebundenen vernadelten und thermofixierten Polyesterfaservlies von 250 g/m$^2$ Flächengewicht mit einem Bindemittelanteil von 40 g/m$^2$, Prüfergebnisse siehe Tabelle.

Beispiel 4

Verbundwerkstoff aus einer 4 mm dicken Polyvinylidenfluoridplatte mit einem chemisch auf Basis von Styrol-Butadien-Kautschuk gebundenen vernadelten Polyesterfaservlies mit einem Flächengewicht von 200 g/m$^2$ und einem Bindemittelanteil von 40 g/m$^2$, Vergleichsbeispiel, Prüfergebnis siehe Tabelle.

Beispiel 5

Verbundwerkstoff aus einer 4 mm dicken Polypropylenplatte mit einem Polyesterfaservlies gemäß Beispiel 1, Vergleichsbeispiel, Prüfergebnis siehe Tabelle.

Beispiel 6

Verbundwerkstoff aus einer 4 mm dicken Polypropylenplatte mit einem Glasfasergewebe gemäß Beispiel 2, Vergleichsbeispiel, Prüfergebnisse siehe Tabelle.

0048837

Beispiel 7

Verbundwerkstoff aus einer 4 mm dicken Polypropylenplatte mit einem erfindungsgemäß chemisch gebundenen Polyesterfaservlies gemäß Beispiel 3, Prüfergebnisse siehe Tabelle.

Beispiel 8

Verbundwerkstoff aus einer 4 mm dicken Polypropylenplatte mit einem Polyesterfaservlies gemäß Beispiel 4, Vergleichsbeispiel, Prüfergebnisse siehe Tabelle.

Aus den Versuchen ergibt sich eindeutig, daß die Verbundwerkstoffe mit Einsatz von erfindungsgemäß ausgebildeten Polyesterfaservliesen die besseren Haftfestigkeitswerte, auch bei höheren Temperaturen, gegenüber den bisher üblicherweise eingesetzten textilen Schichten aufweisen - ein Ergebnis, das nicht erwartet worden war und auf dem in Frage kommenden Einsatzgebiet von größter Bedeutung ist.

Tabelle

| Beispiel | Stirnabzugsfestigkeit ($N/mm^2$) | | | | Druckscherfestigkeit ($N/mm^2$) | Schälfestigkeit gem. British Standards ($N/mm$) |
|---|---|---|---|---|---|---|
| | 23°C | 80°C | 100°C | 120° | 23°C | 23°C |
| 1 | 3,2 | 1,5 | - | 1,1 | 12,0 | 14,0 |
| 2 | 5,0 | 3,0 | - | 1,6 | 10,0 | 14,5 |
| 3 | 9,3 | 6,0 | - | 2,8 | 11,0 | 26,0 |
| 4 | 7,0 | 3,5 | | 1,8 | 11,0 | 15,0 |
| 5 | 3,9 | 3,2 | 2,8 | - | 8,0 | 18,5 |
| 6 | 4,5 | 2,4 | 2,4 | - | 9,0 | 14,0 |
| 7 | 5,5 | 3,9 | 3,4 | - | 13,0 | 32 |
| 8 | 4,7 | 3,3 | 3,0 | | 11,0 | 15,0 |

0048837

Troisdorf, den 18. Sept. 1980
OZ 80066   MG/Bd

Patentansprüche

1. Verbundwerkstoff, insbesondere für den chemischen Apparatebau, enthaltend eine Schicht aus einem thermoplastischen Kunststoff und eine auf diese Schicht in erwärmtem Zustand aufgepreßte textile Schicht aus einem mechanisch vorverfestigten, insbesondere vernadelten und chemisch mit einer Kunststoffdispersion auf Basis von Polymerisaten und/oder Mischpolymerisaten der Acryl- und Methacrylsäureester und des Acrylnitrils gebundenen Polyesterfaservlies.

2. Verbundwerkstoff, nach Anspruch 1, dadurch gekennzeichnet, daß Polyesterfaservliese mit einem Flächengewicht von 100 bis 350 g/m$^2$ mit einem Anteil an Bindemittel von 10 bis 50 % vom Flächengewicht verwendet sind.

3. Verbundwerkstoff nach Anspruch 1 oder 2, dadurch gekennzeichnet, daß thermofixierte Polyesterfaservliese verwendet sind.

4. Verbundwerkstoff nach einem der Ansprüche 1 bis 3, dadurch gekennzeichnet, daß die thermoplastische Kunststoffschicht aus einem Polyolefin, wie Hochdruckpolyäthylen, Niederdruckpolyäthylen, Polypropylen besteht.

5. Verbundwerkstoff nach Anspruch 1 oder 2, dadurch gekennzeichnet, daß die thermoplastische Kunststoffschicht aus Polyvinylidenfluorid besteht.

0048837

1/1

| Europäisches Patentamt | **EUROPÄISCHER RECHERCHENBERICHT** | 0048837 Nummer der Anmeldung |
| --- | --- | --- |
| | | EP 81 10 6904 |

| **EINSCHLÄGIGE DOKUMENTE** | | | KLASSIFIKATION DER ANMELDUNG (Int Cl.) |
| --- | --- | --- | --- |
| Kategorie | Kennzeichnung des Dokuments mit Angabe, soweit erforderlich, der maßgeblichen Teile | betrifft Anspruch | |
| Y | <u>US - A - 2 982 682</u> (N.A. MATLIN et al.) <br><br> * Patentansprüche 1-4; Spalte 5, Zeilen 29-48; Spalte 7, Zeile 14 bis Spalte 8, Zeile 8; Spalte 9, Zeilen 39-46; Spalte 11, Zeilen 56-65; Spalte 13, Zeilen 46-52 * <br><br> --- | 1,2,4 | B 32 B 27/12 |
| Y | <u>US - A - 3 527 221</u> (I. CROON) <br><br> * Patentansprüche 1-8; Spalte 3, Zeile 51 bis Spalte 4, Zeile 62; Figuren 1 und 2 * <br><br> --- | 1,4 | |
| | | | RECHERCHIERTE SACHGEBIETE (Int. Cl.) |
| D/A | <u>DE - A - 2 818 385</u> (DYNAMIT NOBEL) <br><br> * insgesamt * <br><br> --- | 1,5 | B 32 B |
| D/A | <u>DE - A - 2 918 923</u> (SOLVAY) <br><br> * Patentansprüche 1,2,5,7; Seite 4, Absätze 1,3-56 * <br><br> --- | 3 | |
| A | <u>GB - A - 833 679</u> (DU PONT) <br><br> * Beispiel 9 * <br><br> --------- | | |

Der vorliegende Recherchenbericht wurde für alle Patentansprüche erstellt.

| Recherchenort | Abschlußdatum der Recherche | Prüfer |
| --- | --- | --- |
| Den Haag | 18.01.1982 | BLASBAND |

EPA form 1503.1  06.78